# FASCICULE DE BREVET EUROPEEN

(11) **EP 0 859 369 B1**
(45) Date de publication et mention de la délivrance du brevet: **22.08.2001**
(21) Numéro de dépôt: 97403069.4
(22) Date de dépôt: 17.12.1997
(51) Int. Cl.: G21C 21/00, G21C 7/20, B21B 25/00, B21B 21/00

(54) **Procédé de fabrication d'un tube-guide d'un assemblage de combustible d'un réacteur nucléaire, mandrin de formage d'un tube-guide et tube-guide obtenu**
Verfahren zur Herstellung eines Leitrohrs für einen Kernreaktor-brennstabbündel, Formdorn für ein derartiges Leitrohr und dadurch hergestelltes Leitrohr
Method for the manufacture of a thimble for a nuclear reactor fuel assembly, forming mandrel for such a thimble and thimble obtained by this method

(30) Priorité: 12.02.1997 FR 9701621
(43) Date de publication de la demande: 19.08.1998
(73) Titulaire: Compagnie Européenne du Zirconium CEZUS, 92400 Courbevoie (FR)
(72) Inventeur: Drillon, Jean, 44220 Coueron (FR); Aubin, Jean-Luc, 44250 Saint Brevin Les Pins (FR)
(74) Mandataire: Bouget, Lucien

(56) Documents cités:
- EP-A- 0 144 480
- EP-A- 0 661 719
- FR-A- 2 510 002
- SU-A- 1 321 495
- SU-A- 1 360 831
- SU-A- 1 477 489
- SU-A- 1 613 209
- DATABASE WPI Section Ch, Week 8236, Derwent Publications Ltd., London, GB; Class M21, AN 1982-76311E, XP002038700 & SU 880 524 A (TIMOSHENKO L V) 15 Novembre 1981

## Description

L'invention concerne un procédé de fabrication d'un tube-guide d'un assemblage de combustible d'un réacteur nucléaire, un mandrin de formage du tube-guide et le tube-guide obtenu.

Les assemblages de combustible, en particulier les assemblages de combustible pour les réacteurs nucléaires refroidis par de l'eau comportent généralement une ossature dans laquelle sont introduits et maintenus des crayons de combustible constituant un faisceau dans lequel les crayons sont parallèles entre eux. L'ossature comporte en particulier des tubes-guides dans des dispositions parallèles aux crayons du faisceau qui constituent à la fois des éléments de structure de l'ossature et des éléments de guidage de crayons absorbants de barres de commande utilisées pour régler en service la réactivité du coeur du réacteur nucléaire constitué par des assemblages de combustible juxtaposés. Les assemblages de combustible sont disposés dans le coeur du réacteur nucléaire dans une position verticale, c'est-à-dire dans une position telle que les crayons du faisceau de l'assemblage et les tubes-guides soient verticaux. Les tubes-guides assurant le guidage des crayons absorbants des grappes de commande du réacteur nucléaire présentent, dans une partie d'extrémité constituant la partie d'extrémité inférieure des tubes-guides des assemblages en position de service dans le coeur, un diamètre réduit ou un étranglement de section qui a pour but de créer une zone dans laquelle les crayons absorbants des barres de commande du réacteur sont freinés, en cas de chute des barres de commande consécutive à un arrêt du réacteur nucléaire qui peut être un arrêt programmé ou un arrêt pour une cause incidentielle. Ce dispositif de freinage des barres de commande par laminage de fluide de refroidissement du réacteur entre les crayons absorbants de la barre de commande et la partie inférieure à diamètre réduit des tubes-guides fonctionne en mettant en oeuvre un effet de freinage appelé effet dash-pot.

La partie inférieure des tubes-guides des assemblages de combustible est fortement sollicitée, lors de la chute des barres de commande, en particulier par compression du fluide de refroidissement en contact avec les parois internes des tubes-guides de l'assemblage combustible dans leur zone à diamètre réduit. Dans le cas de transitoires de fonctionnement du réacteur nucléaire, l'assemblage peut être légèrement soulevé par le fluide de refroidissement et la force d'inertie de l'assemblage de combustible lors de sa descente peut provoquer la flexion et/ou la torsion de la partie à diamètre réduit des tubes-guides qui constitue une partie faible du tube, lorsque la diminution de diamètre de la partie inférieure du tube-guide est obtenue par rétreint du tube, l'épaisseur de paroi étant sensiblement constante sur toute la longueur du tube.

On a donc proposé d'utiliser des tubes-guides dont la partie d'extrémité inférieure ou embase est renforcée de manière à supporter les contraintes lors de la chute des barres de commande et lors de transitoires. Une première solution peut consister à renforcer la partie inférieure du tube-guide par une enveloppe tubulaire coaxiale au tube-guide plaquée et soudée contre le tube-guide à ses deux extrémités. Cependant, les soudures de parties renforcées sur les tubes-guides en alliage de zirconium qui entraînent la formation de contraintes résiduelles peuvent diminuer la tenue mécanique et la tenue à la corrosion des tubes-guides. En outre, il peut se produire des défauts d'alignement entre les deux tronçons de tube à assembler.

On a donc proposé dans le FR-A-2714516 de réaliser un tube-guide à embase renforcée, de manière monobloc. Le tube-guide présente une surface externe cylindrique ayant un diamètre sensiblement constant, à l'exception des zones terminales de fixation du tube-guide sur les embouts de l'assemblage de combustible, et la paroi du tube présente une épaisseur accrue dans une partie inférieure dont la longueur peut être comprise entre 10 et 30% de la longueur totale du tube.

Le tube-guide est obtenu en réalisant une ébauche tubulaire dont l'épaisseur est sensiblement constante et dont on réduit l'épaisseur sur une fraction de sa longueur comprise entre 70 et 90 % en conservant un diamètre intérieur constant. On repousse ensuite vers l'intérieur la partie de l'ébauche qui a conservé son épaisseur d'origine pour constituer un tube de diamètre extérieur constant. La réduction d'épaisseur du tube et le repoussage peuvent être effectués par des opérations de martelage rotatif.

Cette technique d'obtention de tubes-guides en alliage de zirconium s'est avérée délicate à mettre en oeuvre.

En outre, entre la partie du tube appelée partie courante présentant une première épaisseur qui a été obtenue par réduction de l'épaisseur de l'ébauche et la seconde partie du tube qui a été repoussée vers l'intérieur, il existe une zone de transition dont la surface interne présente la forme d'un chanfrein conique dont l'angle au sommet a une valeur voisine de 10°. La présence d'une discontinuité de la surface cylindrique interne du tube-guide peut diminuer la qualité du guidage des crayons absorbants et limiter la vitesse de chute des barres de commande. En outre, cette zone de transition peut être une zone d'affaiblissement du tube-guide.

Pour la fabrication des tubes de gainage des crayons des assemblages de combustible des réacteurs nucléaires en alliage de zirconium, on réalise de manière habituelle le formage d'une ébauche tubulaire par laminage dans un laminoir à pas de pèlerin. Le laminage permet d'obtenir le tube de gainage avec ses dimensions définitives, au cours de plusieurs opérations successives de laminage.

Ce procédé peut être utilisé également pour la mise en forme de tubes-guides en alliage de zirconium.

Cependant, un tel procédé n'a jamais été utilisé jusqu'ici pour fabriquer un tube-guide ayant une surface extérieure cylindrique à diamètre constant, une partie courante du tube-guide ayant une première épaisseur et une partie d'extrémité inférieure du tube-guide ayant une seconde épaisseur supérieure à l'épaisseur de la partie courante.

Le but de l'invention est de proposer un procédé de fabrication d'un tube-guide pour un assemblage de combustible d'un réacteur nucléaire ayant un diamètre extérieur sensiblement constant et présentant au moins une partie courante ayant une première épaisseur de paroi et une partie renforcée, sur une fraction de la longueur du tube-guide, ayant une seconde épaisseur de paroi supérieure à la première épaisseur, consistant à laminer une ébauche tubulaire sur un mandrin, dans un laminoir à pas de pèlerin.

Dans ce but :
- on réalise, dans une première phase, le laminage d'un premier tronçon de l'ébauche, sur une première partie du mandrin, avec une réduction de diamètre extérieur de l'ébauche jusqu'au diamètre extérieur du tube-guide et une réduction de l'épaisseur de la paroi de l'ébauche jusqu'à l'une de la première et la seconde épaisseurs,
- on déplace le mandrin dans la direction axiale de l'ébauche, et
- on réalise, dans une seconde phase, le laminage d'un second tronçon de l'ébauche, sur une seconde partie du mandrin espacée de la première partie dans la direction axiale, avec une réduction du diamètre extérieur de l'ébauche jusqu'au diamètre extérieur du tube-guide et une réduction de l'épaisseur de l'ébauche jusqu'à l'autre de la première et de la seconde épaisseur.

Afin de bien faire comprendre l'invention, on va maintenant décrire, à titre d'exemple non limitatif, en se référant aux figures jointes en annexe, la mise en oeuvre du procédé suivant l'invention, le mandrin de formage utilisé pour la mise en oeuvre du procédé et le tube-guide obtenu.

La figure 1 est une vue en coupe axiale d'un tube-guide à embase renforcée réalisé de manière monobloc, selon l'art antérieur.

La figure 2 est une vue en élévation et en coupe d'un laminoir à pas de pèlerin au cours du laminage d'une ébauche tubulaire.

La figure 3 est une vue de côté du mandrin de formage mis en oeuvre dans le procédé de fabrication d'un tube-guide suivant l'invention.

Les figures 4A et 4B sont des vues de côté avec coupe partielle d'un mandrin et d'une ébauche en cours de formage, lors des deux phases, d'un procédé de fabrication de tubes-guides suivant l'invention.

La figure 5 est une vue en coupe axiale d'un produit obtenu en sortie du laminoir à pas de pèlerin, lors de la fabrication d'un tube-guide suivant l'invention.

La figure 6 est une vue en coupe axiale du produit laminé obtenu à la sortie du laminoir à pas de pèlerin, au cours d'une opération de découpage pour obtenir des tubes-guides.

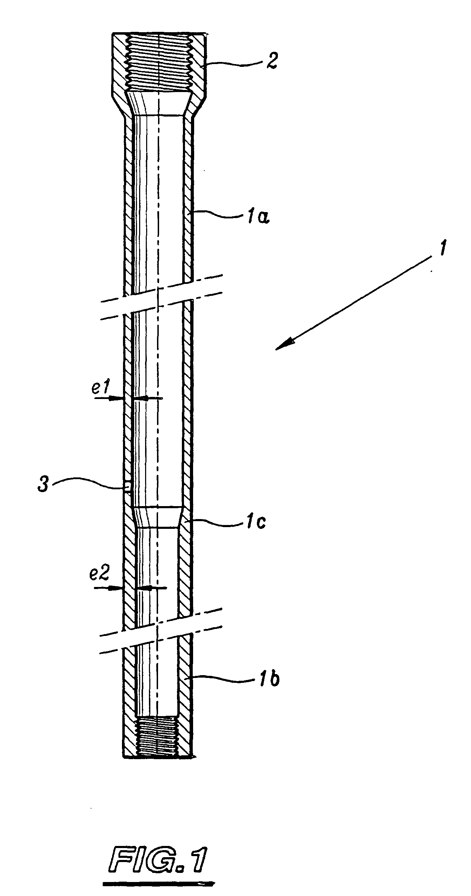

Sur la figure 1, on a représenté un tube-guide d'un assemblage de combustible pour un réacteur nucléaire à eau sous pression désigné de manière générale par le repère 1. Le tube-guide 1 qui est en alliage de zirconium présente une surface externe cylindrique dont le diamètre est constant suivant la longueur du tube, à l'exception de la partie supérieure 2 du tube qui est évasée et qui comporte par exemple un alésage intérieur taraudé. Cette partie supérieure du tube permet de réaliser la fixation du tube dans l'embout supérieur de l'assemblage combustible, éventuellement en utilisant des moyens de fixation amovibles. Le tube-guide 1 comporte également une extrémité inférieure taraudée intérieurement par l'intermédiaire de laquelle le tube peut être fixé sur l'embout inférieur de l'assemblage de combustible.

Le tube-guide 1 comporte une partie courante 1a et une partie d'extrémité inférieure 1b qui se différencient par le fait que la partie courante 1a présente une première épaisseur de paroi e1 et la partie d'extrémité inférieure 1b, une seconde épaisseur e2 supérieure à l'épaisseur e1. De ce fait, la partie 1b constitue une partie renforcée du tube.

Dans certains cas, le tube-guide peut comporter une partie renforcée d'épaisseur supérieure entre deux parties courantes d'épaisseur inférieure à la partie renforcée, au lieu d'une partie d'extrémité renforcée.

Le diamètre extérieur du tube est constant et identique dans la partie courante 1a du tube et dans la partie renforcée 1b.

Le diamètre intérieur du tube dans la partie courante 1a est donc supérieur au diamètre intérieur du tube dans la partie 1b et le tube-guide 1 présente une zone de transition 1c entre ses parties 1a et 1b. Dans 1a zone de transition 1c, la surface intérieure du tube est constituée par un chanfrein conique dont l'angle au sommet est voisin de 10°.

La paroi de la partie d'extrémité inférieure du tube peut être traversée par des ouvertures telles que 3 qui permettent de limiter la surpression du liquide de refroidissement du réacteur dans la partie inférieure du tube-guide, lors de la retombée du crayon absorbant dont le tube assure le guidage et de rendre plus progressif le freinage du crayon absorbant lors de la retombée d'une grappe.

L'épaisseur accrue e2 de la paroi du tube-guide dans la partie d'extrémité inférieure 1b du tube-guide permet de renforcer la partie inférieure du tube-guide et d'éviter une détérioration de cette partie inférieure par effet de la surpression au moment de la retombée du crayon absorbant de la grappe de commande et lors de transitoires du réacteur nucléaire. Cependant, la présence d'une zone intermédiaire 1c dont la paroi interne a la forme d'un chanfrein conique crée une discontinuité quant au guidage du crayon absorbant dans le tube-guide. En outre, la zone intermédiaire peut être une zone de faiblesse du tube.

En outre, pour réaliser la fabrication du tube représenté sur la figure 1, il est nécessaire de mettre en oeuvre un procédé de formage tel que le martelage rotatif pour réduire l'épaisseur de paroi dans la zone courante du tube-guide, c'est-à-dire suivant la majeure partie de la longueur du tube puis pour repousser vers l'intérieur la paroi épaisse de la partie inférieure du tube.

Une telle technique de formage est délicate à mettre en oeuvre et demande un temps d'exécution relativement long.

Le procédé suivant l'invention permet de fabriquer un tube monobloc ayant une partie renforcée par une technique de laminage sur un laminoir à pas de pèlerin.

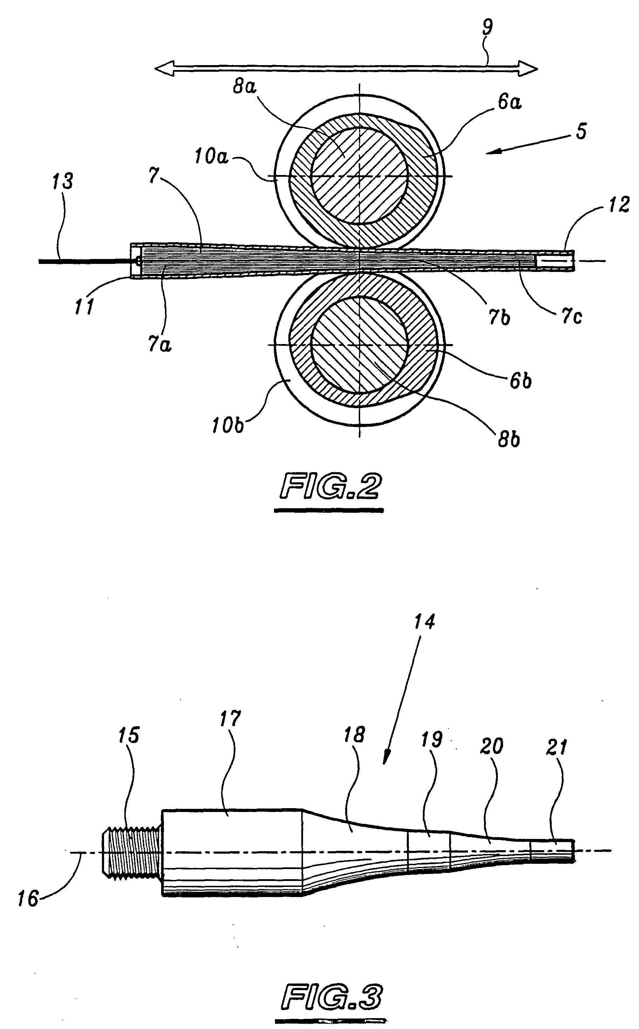

Sur la figure 2, on a représenté de manière schématique les éléments principaux d'un laminoir à pas de pèlerin pour réaliser le formage d'un tube à partir d'une ébauche tubulaire.

Le laminoir à pas de pèlerin désigné de manière générale par le repère 5 comporte principalement, une première matrice 6a et une seconde matrice 6b, réalisées sous la forme de cylindres cannelés montés rotatifs autour de leur axe et un mandrin 7 ayant une forme symétrique de révolution.

Les matrices 6a et 6b sont montées rotatives, par l'intermédiaire de leurs axes 8a et 8b, respectivement, dans une cage qui est montée mobile et associée à des moyens moteurs, de manière à pouvoir se déplacer dans la direction axiale du mandrin 7, dans un sens et dans l'autre, avec une amplitude constante, comme représenté schématiquement par la double flèche 9.

Chacune des matrices 6a et 6b comporte une gorge périphérique respective 10a ou 10b, appelée cannelure, dont la section transversale par un plan de direction radiale de la matrice a une forme proche de la forme semi-circulaire.

La section transversale des gorges 10a et 10b des matrices 6a et 6b a une dimension qui varie de manière continue suivant la périphérie de la gorge, la section ayant une dimension maximale dans une partie d'entrée et une section minimale dans une partie de sortie de la gorge.

Les matrices 6a et 6b sont mises en rotation autour de leur axe respectif, dans un sens ou dans l'autre, du fait du déplacement de la cage, dans un sens ou dans l'autre pendant le déplacement alternatif schématisé par la double flèche 9.

Le laminoir à pas de pèlerin représenté sur la figure 2 permet de réaliser le laminage de la paroi d'une ébauche tubulaire 11 engagée sur le mandrin 7, de manière à réduire progressivement le diamètre et l'épaisseur de paroi de l'ébauche pour obtenir, en sortie du laminoir, un tube 12 dont le diamètre et l'épaisseur de paroi sont inférieures au diamètre et à l'épaisseur de paroi de l'ébauche 11. Du fait du laminage, l'ébauche 11 subit un allongement qui peut être important dans la direction axiale.

Le mandrin 7 sur lequel est engagé l'ébauche 11 est solidaire d'une tringle 13 qui permet de déplacer le mandrin 7 en translation et en rotation autour de son axe.

Le laminoir à pas de pèlerin 5 comporte également un chariot (non représenté) qui peut être rendu solidaire de l'ébauche 11 par l'intermédiaire de pinces. Le chariot permet de faire avancer l'ébauche dans le sens du laminage après chacun des pas réalisé par le laminoir à pas de pèlerin. Le dispositif de déplacement de l'ébauche permet également de la faire tourner autour de son axe à l'issue de chacun des pas de laminage.

Le mandrin 7 comporte une première partie 7a cylindrique dont le diamètre est inférieur au diamètre intérieur de l'ébauche 11, une seconde partie 7b symétrique de révolution dont les courbes méridiennes ont sensiblement la forme de paraboles et une partie terminale légèrement conique 7c ayant comme diamètre le diamètre intérieur final du tube 12 à réaliser, ou un diamètre approchant.

Les matrices 6a et 6b sont disposées de part et d'autre du mandrin 7 sur lequel sont engagés l'ébauche 11 et le tube 12 en cours de laminage, de telle manière que les gorges 10a et 10b constituent, pendant le déplacement dans la direction axiale et la rotation des matrices, une surface de formage du tube ayant une section à peu près circulaire. Du fait que la dimension des sections transversales des gorges 10a et 10b varient de manière continue suivant la périphérie des matrices, les dimensions de la surface de formage cylindrique du tube varient elles-mêmes entre une dimension maximale et une dimension minimale pendant les déplacements de la cage et des matrices.

La cage se déplace dans la direction axiale avec une amplitude correspondant sensiblement à la longueur du mandrin, suivant la zone 7b de réduction de l'ébauche et la zone 7c de calibrage du tube 12 ; le diamètre et l'épaisseur de l'ébauche 11 sont réduits progressivement jusqu'aux valeurs du diamètre et de l'épaisseur de paroi du tube 12.

A l'issue de chacun des déplacements de la cage de laminage, on réalise l'avance de l'ébauche sur le mandrin, avec une certaine amplitude dans la direction axiale, et on fait tourner l'ébauche autour de son axe d'un certain angle. Simultanément, on fait tourner le mandrin 7 autour de son axe par l'intermédiaire de la tringle 13.

Le laminage peut être réalisé de manière pratiquement continue, en engageant des ébauches sur la tringle 13 et le mandrin 7 l'une à la suite de l'autre et en récupérant les tubes 12 à la sortie du laminoir.

La méthode de laminage à pas de pèlerin qui vient d'être décrite peut être appliquée à la fabrication de tubes-guides comportant une partie d'extrémité inférieure ayant une paroi d'épaisseur accrue par rapport à l'épaisseur de paroi de la partie courante du tube.

Pour mettre en oeuvre le procédé de fabrication de tubes-guides suivant l'invention, on utilise un laminoir à pas de pèlerin comportant un mandrin d'une forme particulière, tel que représenté sur la figure 3.

Le mandrin 14 ayant une forme symétrique de révolution comporte une extrémité filetée 15 permettant le raccordement du mandrin à une tringle de maintien et de manoeuvre. A la suite de la partie filetée, dans la direction axiale 16, le mandrin comporte une première partie cylindrique 17 dont le diamètre est inférieur au diamètre intérieur de l'ébauche de départ utilisée pour le formage du tube-guide, une première partie 18 à section décroissante symétrique de révolution présentant une méridienne en forme de parabole ou de forme approchante, une seconde partie légèrement conique 19 dont le diamètre est à peu près égal au diamètre intérieur de la partie courante du tube-guide à réaliser, une seconde partie 20 à diamètre décroissant symétrique de révolution ayant une méridienne en forme de parabole ou de forme approchante et une troisième partie légèrement conique 21 dont le diamètre est égal à peu près au diamètre intérieur de la partie d'extrémité inférieure renforcée du tube-guide à réaliser.

Le mandrin 14 présente donc plusieurs tronçons successifs de formage dans la direction axiale constituant différents étages de mise en forme du tube-guide.

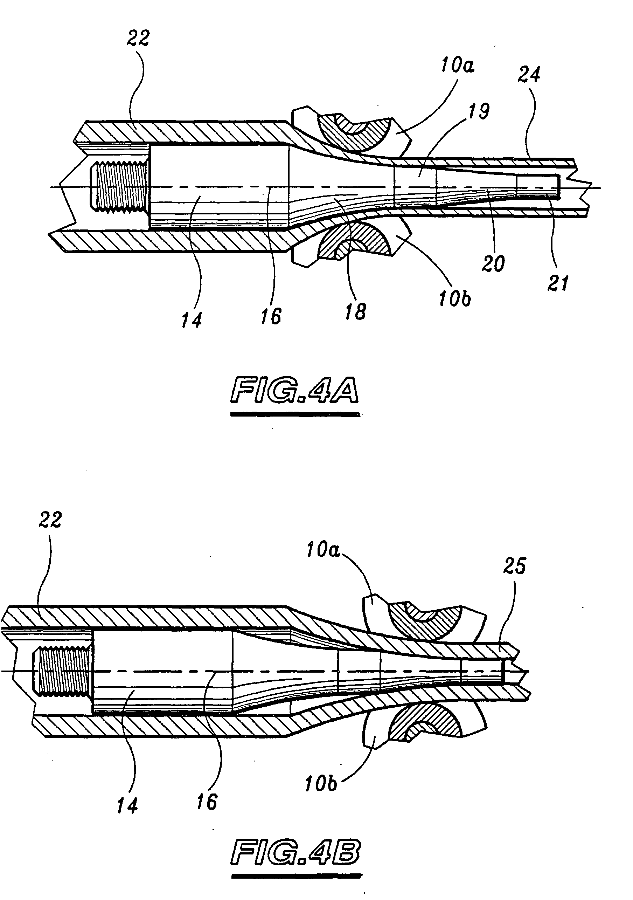

On utilise le mandrin 14 de forme étagée pour réaliser la fabrication de tubes-guides selon le procédé de l'invention, au cours de deux phases successives représentées respectivement sur les figures 4A et 4B effectuées dans cet ordre ou dans l'ordre inverse qui peuvent être éventuellement réalisées sur des tronçons successifs d'une ébauche de tube, de manière à réaliser en une seule opération un produit laminé dans lequel on peut obtenir par découpage plusieurs tubes-guides ayant une partie renforcée.

Sur la figure 4A on a représenté le mandrin 14 au cours d'une première phase du laminage à pas de pèlerin d'une ébauche tubulaire 22 dont à la fois le diamètre et l'épaisseur de paroi sont supérieurs au diamètre et à l'épaisseur de paroi du tube-guide à réaliser.

Le laminoir à pas de pèlerin comporte deux matrices 10a et 10b qui sont analogues aux matrices qui ont été décrites dans le cas du laminoir à pas de pèlerin 5 représenté sur la figure 2.

Le laminoir à pas de pèlerin utilisé pour la mise en oeuvre de l'invention et représenté sur les figures 4A et 4B ne diffère du laminoir à pas de pèlerin de type classique représenté sur la figure 2 que par l'utilisation du mandrin étagé 14 et la mécanisation du déplacement axial du mandrin.

Les matrices 10a et 10b montées mobiles en rotation à l'intérieur d'une cage qui peut être déplacée dans la direction axiale 16 du mandrin 14, permettent de réaliser la réduction de diamètre et d'épaisseur de l'ébauche 22.

L'ébauche 22 a été obtenue par des opérations préalables d'élaboration et de mise en forme qui peuvent comporter elles-mêmes des opérations de laminage à pas de pèlerin.

L'ébauche 22 présente un diamètre intérieur légèrement supérieur au diamètre extérieur de la partie cylindrique 17 du mandrin 14 et une épaisseur de paroi supérieure à l'épaisseur de paroi du tube-guide, dans sa partie d'extrémité inférieure où l'épaisseur de paroi est maximale.

Comme il est visible sur la figure 4A, le laminage à pas de pèlerin est réalisé pendant la première phase du laminage, avec le mandrin 14 placé de manière que les matrices 10a et 10b montées rotatives dans la cage du laminoir se déplacent de manière alternative le long des parties 18 et 19 du mandrin 14.

De cette manière, le diamètre intérieur et le diamètre extérieur du produit tubulaire 24 obtenu à la sortie du laminoir, c'est-à-dire en aval de la zone 19 du mandrin 14 sont identiques au diamètre intérieur et au diamètre extérieur de la partie courante du tube-guide à réaliser. En particulier, la partie 19 du mandrin 14 constitue une partie de calibrage du produit 24, de manière que son diamètre intérieur ait pour dimension précise le diamètre intérieur visé de manière à réaliser le tube-guide.

La dimension et la disposition des matrices 10a et 10b d'autre part sont telles que le diamètre extérieur du produit 24 à la sortie du laminoir corresponde de manière précise au diamètre extérieur visé de manière à réaliser le tube-guide.

La première phase de laminage est effectuée en réalisant un certain nombre de pas de laminage successifs entre lesquels on fait avancer et tourner l'ébauche 22 autour de son axe, le mandrin 14 étant également déplacé en rotation d'un certain angle entre les pas de laminage successifs.

Un dispositif de codage associé au laminoir à pas de pèlerin permet de déterminer de manière très précise la longueur du produit 24 obtenu en sortie du laminoir.

Lorsqu'une longueur prédéterminée du produit a été obtenue en sortie du laminoir, le dispositif de codage fournit un signal permettant de commander le déplacement du mandrin 14 dans la direction axiale et éventuellement l'arrêt du laminoir.

La seconde phase du laminage, représentée sur la figure 4B, est en effet réalisée après un déplacement du mandrin 14 dans la direction axiale et vers l'amont du laminoir à pas de pèlerin, de manière à placer les parties 20 et 21 du mandrin dans la zone de travail du laminoir, c'est-à-dire dans la zone de déplacement des matrices 10a et 10b.

Le déplacement du mandrin 14 de sa position représentée sur la figure 4A permettant la mise en oeuvre de la première phase du laminage à sa position représentée sur la figure 4B et permettant la mise en oeuvre de la seconde phase de laminage peut être réalisé soit après avoir arrêté l'opération de laminage à pas de pèlerin, la cage dans laquelle les matrices 10a et 10b sont montées étant immobile, soit sans arrêter le laminage, la cage dans laquelle sont montées les matrices restant en mouvement.

Dans la seconde phase du laminage, les matrices 10a et 10b rotatives et déplacées dans la direction axiale par la cage de laminoir assurent la réduction des dimensions de l'ébauche de manière à obtenir à la sortie du laminoir, c'est-à-dire en aval de la partie 21 du mandrin, un produit tubulaire laminé 25 dont le diamètre intérieur calibré par la partie 21 du mandrin est égal au diamètre intérieur visé de manière à réaliser le tube-guide, dans sa zone d'extrémité inférieure renforcée.

Le diamètre extérieur du produit 25 est identique au diamètre extérieur du produit 24 obtenu lors de la première phase de laminage, du fait que les matrices 10a et 10b mises en oeuvre sont les mêmes que lors de la première phase du laminage.

Le mandrin 14 doit comporter, de manière générale, une première partie dont le diamètre de la section transversale diminue dans la direction axiale depuis une valeur inférieure au diamètre intérieur de l'ébauche jusqu'à une valeur égale au diamètre intérieur de la partie courante du tube à réaliser et une seconde partie dont le diamètre de la section transversale diminue, dans la direction axiale du mandrin, depuis une valeur égale au diamètre intérieur de la partie courante du tube à réaliser jusqu'à une valeur égale au diamètre intérieur de la partie d'extrémité inférieure du tube à réaliser.

L'épaisseur de paroi du produit 25, à la sortie du laminoir, correspond donc de manière très précise à l'épaisseur de paroi à obtenir dans la partie d'extrémité inférieure du tube-guide. Le dispositif de codage permet, comme précédemment, d'arrêter la seconde phase de laminage, dès qu'une longueur prédéterminée du produit 25 a été obtenue en sortie du laminoir. On procède alors au déplacement du mandrin de sa seconde à sa première position.

La première phase de laminage, le premier déplacement du mandrin, la seconde phase de laminage et le second déplacement du mandrin peuvent être réalisés de manière répétée autant de fois qu'il est nécessaire pour réaliser le laminage complet d'une ébauche 22. De même, on peut évidemment intervertir la première et la deuxième phase de laminage.

On obtient ainsi, en sortie du laminoir à pas de pèlerin, un produit tubulaire laminé comportant des tronçons successifs 24 dont le diamètre intérieur et l'épaisseur de paroi correspondent au diamètre intérieur et à l'épaisseur de paroi de la partie courante d'un tube-guide à réaliser 25, et dont le diamètre intérieur et l'épaisseur de paroi correspondent au diamètre et à l'épaisseur de paroi des parties d'extrémité inférieures des tubes-guides à réaliser.

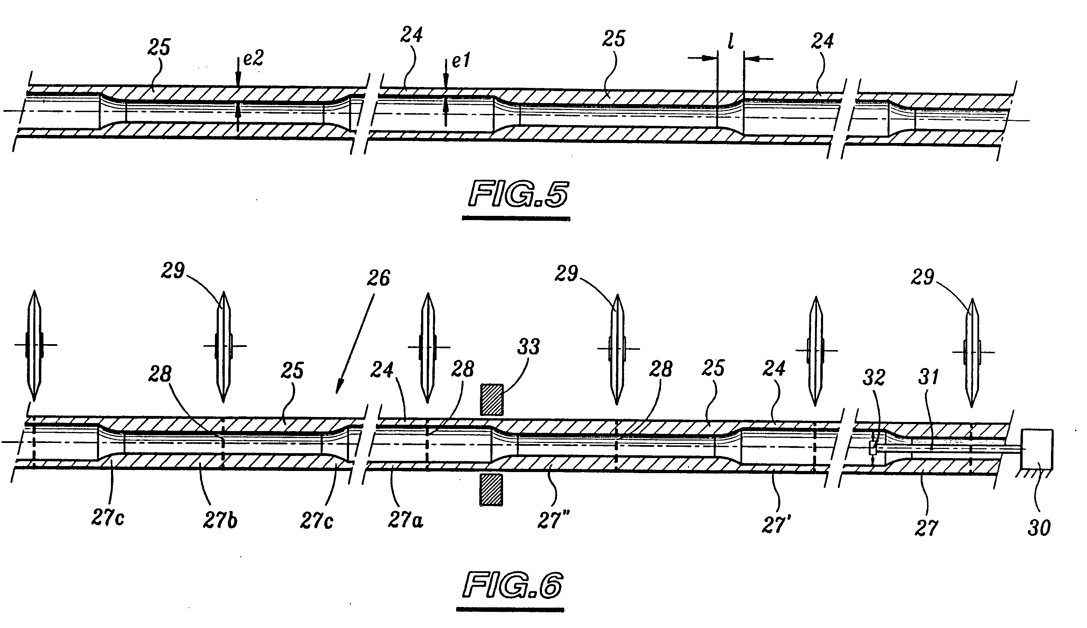

Un tel produit obtenu en sortie du laminoir est représenté sur la figure 5 sur laquelle les différences d'épaisseur de paroi ont été fortement exagérées.

Dans le cas de la fabrication de tubes-guides pour des assemblages de combustible d'un réacteur nucléaire à eau sous pression, la partie courante 24 des tubes-guides présente une épaisseur e1 qui peut être de 0,5 mm. Les parties d'extrémité inférieures renforcées des tubes-guides ont une épaisseur e2 de l'ordre de 1,2mm.

Le procédé de fabrication suivant l'invention sur un laminoir à pas de pèlerin permet d'obtenir une zone de transition entre les parties courantes et les parties renforcées des tubes-guides d'une longueur 1 de l'ordre de 180 mm. Dans tous les cas, cette longueur de la zone de transition est supérieure à 100 mm. Le tube-guide ayant lui-même un diamètre de l'ordre de 12,5 mm, il en résulte que le changement de diamètre intérieur du tube-guide entre la partie courante et la partie renforcée se fait de manière très progressive. La zone de transition entre les parties à diamètre différent de la surface intérieure du tube est différente d'un chanfrein, ce qui différencie les tubes-guides suivant l'invention des tubes-guides connus de l'art antérieur.

En outre, le procédé de formage continu du tube permet d'obtenir des zones de transition dans lesquelles le métal est exempt de défaut et qui ne constituent donc pas des zones de faiblesse du tube.

Comme il est visible sur la figure 6, le produit 26 de forme tubulaire obtenu en sortie du laminoir et comportant des zones successives 24 et 25 ayant des épaisseurs de paroi différentes présente un diamètre extérieur constant.

De plus, la longueur des zones 24 et 25 a été choisie lors du laminage, de manière qu'on puisse obtenir, par tronçonnage du tube 26 dans des zones déterminées, plusieurs tubes-guides 27 comportant chacun une partie courante 27a et une partie d'extrémité inférieure renforcée 27b ayant une longueur et une épaisseur de paroi voulues. De préférence, les zones 24 et 25 présentent une longueur qui est à peu près égale respectivement, au double de la longueur de la partie courante et au double de la longueur de la partie renforcée d'un tube-guide à réaliser.

Le repérage de la position des lignes de découpage 28 suivant lesquelles un outil 29 doit réaliser successivement le découpage du produit tubulaire laminé 26 est réalisé en utilisant un dispositif de repérage précis des zones de transition 27c entre les parties du produit tubulaire 26 d'épaisseur différente. On effectue, de manière très précise, le repérage de l'extrémité des zones 25 du produit tubulaire 26 se raccordant aux zones de transition 27c d'une longueur de 180 mm, suivant lesquelles la paroi passe de la première épaisseur e1 à la seconde épaisseur e2. Le repérage précis de l'extrémité des zones 25 et 27c peut être effectué en utilisant une jauge à air 30 comportant un conduit 31 qui est engagé axialement à l'intérieur du produit tubulaire 26 et qui comporte une buse 32 à son extrémité. Les caractéristiques d'écoulement de l'air par la buse 32 qui peuvent être repérées par la jauge à air 30 permettent de déterminer de manière très précise l'extrémité des zones 25 d'épaisseur e2 et des zones de transition 27c entre les parties du produit tubulaire ayant des épaisseurs différentes.

L'outil de coupe 29, constitué par un disque de coupe, est placé à une distance définie de la position qui a été repérée, pour réaliser le tronçonnage du tube suivant la ligne de coupe 28.

L'outil de coupe 29 peut être un outil d'un dispositif de coupe à la volée qui se déplace en synchronisme avec le produit tubulaire 26 à la sortie du laminoir.

On peut également déterminer la position de l'extrémité des zones 25 et des zones de transition 27, en utilisant une bobine 33 encerclant le tube et constituant un capteur à courant de Foucault.

En réalisant le repérage des extrémités des zones 25 et des zones de transition 27c successives du produit tubulaire laminé 26, on peut obtenir par découpage des tubes-guides 27, 27', 27" constitués par des tronçons successifs du produit tubulaire 26.

Il est possible de prévoir des ébauches et des opérations de laminage à pas de pèlerin permettant d'obtenir quatre à cinq tubes-guides d'une longueur de l'ordre de 4 m à partir de chacune des ébauches 22 laminées dans le laminoir à pas de pèlerin.

Il est également possible d'utiliser un dispositif de coupe à la volée qui est déclenché par le mouvement d'avance ou de recul du mandrin entre les différentes phases de laminage, avec une certaine temporisation ou encore par des dispositifs de repérage des extrémités de zones de transition tels que décrits ci-dessus, pour réaliser le tronçonnage du produit laminé sous forme de tube-guide en sortie du laminoir et pendant l'opération de laminage. En réalisant un repérage précis des zones de transition et en effectuant la coupe des tubes-guides à la volée à la sortie du laminoir, on peut éviter une dispersion quant à la longueur des zones successives d'épaisseurs différentes 24 et 25 du produit laminé et obtenir des tubes-guides par simple découpage..

De manière habituelle, la longueur de la zone d'extrémité inférieure du tube dont l'épaisseur de paroi est supérieure à l'épaisseur de paroi de la partie courante du tube représente de 10 à 30 % de la longueur totale du tube-guide.

L'invention permet donc d'obtenir des tubes-guides renforcés par exemple dans leur partie inférieure, sous forme monobloc, par un procédé de laminage qui peut être facilement automatisé et qui permet d'obtenir une très bonne productivité.

L'invention ne se limite pas au mode de réalisation qui a été décrit.

C'est ainsi que le mandrin sur lequel est réalisé le laminage à pas de pèlerin peut avoir une forme différente de celle qui a été décrite.

Le procédé peut être mis en oeuvre pour la fabrication de tubes-guides en un matériau différent d'un alliage de zirconium.

De manière générale, l'invention s'applique à la fabrication de tubes-guides d'assemblages de combustible d'un type quelconque dans lesquels on réalise un freinage de barres de commande par un effet dash-pot.

## Revendications

1. Procédé de fabrication d'un tube-guide (27, 27', 27") pour un assemblage de combustible d'un réacteur nucléaire ayant un diamètre extérieur sensiblement constant et présentant au moins une partie courante (27a) ayant une première épaisseur de paroi (e1) et une partie renforcée (27b) sur une fraction de la longueur du tube-guide, ayant une seconde épaisseur de paroi (e2) supérieure à la première épaisseur (e1), consistant à laminer une ébauche tubulaire (22) sur un mandrin (14), dans un laminoir à pas de pèlerin (5), caractérisé par le fait :
- qu'on réalise dans une première phase, le laminage d'un premier tronçon de l'ébauche (22), sur une première partie (18, 19) du mandrin (14), avec une réduction du diamètre extérieur de l'ébauche (22) jusqu'au diamètre extérieur du tube-guide (27) et une réduction de l'épaisseur de la paroi de l'ébauche (22) jusqu'à l'une de la première épaisseur (e1) et de la seconde épaisseur (e2),
- qu'on déplace le mandrin (14) dans la direction axiale de l'ébauche (22), et
- qu'on réalise dans une seconde phase, le laminage d'un second tronçon de l'ébauche (22), sur une seconde partie (20, 21) du mandrin (14) espacée de la première partie (18, 19) dans la direction axiale du mandrin (14), avec une réduction du diamètre extérieur de l'ébauche (22) jusqu'au diamètre extérieur du tube-guide (27) et une réduction de l'épaisseur de l'ébauche (22) jusqu'à l'autre de la première (e1) et de la seconde épaisseur (e2).

2. Procédé suivant la revendication 1, caractérisé par le fait qu'on réalise successivement, suivant la longueur d'une même ébauche (22), de manière répétée, la première phase de laminage, un premier déplacement intermédiaire du mandrin (14), la seconde phase de laminage, et un second déplacement du mandrin inverse du premier déplacement, le premier déplacement intermédiaire du mandrin étant réalisé dans la direction axiale entre une première et une seconde positions permettant les réductions de diamètre et d'épaisseur de l'ébauche au cours de la première et de la seconde phases, respectivement,
- qu'on obtient en sortie du laminoir à pas de pèlerin, un produit laminé tubulaire (26) comportant des zones successives (24, 25) ayant respectivement la première épaisseur (e1) et la seconde épaisseur (e2),
- qu'on découpe le produit tubulaire laminé (26) sous forme de tronçons, dans des zones déterminées, pour obtenir une pluralité de tubes-guides (27, 27', 27") comportant chacun une partie courante ayant une première épaisseur (e1) et une partie renforcée ayant une seconde épaisseur (e2) supérieure à la première épaisseur (e1).

3. Procédé suivant la revendication 2, caractérisé par le fait que, on découpe le tube en utilisant un dispositif de coupe à la volée.

4. Procédé suivant l'une quelconque des revendications 2 et 3, caractérisé par le fait que, préalablement au découpage du produit laminé (26), on repère sur le produit laminé (26), la position d'une extrémité de zones de transition (27c) entre les parties du produit laminé tubulaire (26) ayant la première et la seconde épaisseurs de paroi respectivement.

5. Procédé suivant la revendication 4, caractérisé par le fait qu'on repère l'extrémité des zones de transition (27c) en utilisant une jauge à air (30) reliée par un conduit (31) à une buse (32) qui est introduite à l'intérieur du produit tubulaire (26).

6. Procédé suivant la revendication 4, caractérisé par le fait qu'on repère la position de l'extrémité des zones de transition (27c) du produit laminé (26), en utilisant une sonde à courants de Foucault (33) constituée par un bobinage encerclant le produit tubulaire laminé (26).

7. Mandrin de formage d'un laminoir à pas de pèlerin (5) pour la mise en oeuvre d'un procédé suivant l'une quelconque des revendications 1 à 6, caractérisé par le fait qu'il comporte, successivement suivant sa longueur, une première partie (18, 19) symétrique de révolution dont le diamètre de la section transversale suivant la direction axiale du mandrin diminue depuis une première valeur inférieure au diamètre intérieur de l'ébauche (22) jusqu'à une valeur égale au diamètre intérieur de la partie courante (27a) du tube-guide (27) à réaliser et une seconde partie (20, 21) symétrique de révolution dont le diamètre de la section transversale diminue, dans la direction axiale du mandrin, depuis une valeur égale au diamètre intérieur de la partie courante (27a) du tube-guide (27) jusqu'à une seconde valeur égale au diamètre intérieur de la partie renforcée (27b) du tube (27).

8. Mandrin suivant la revendication 7, caractérisé par le fait que chacune des parties successives (18, 19, 20, 21) du mandrin (14) comporte un tronçon (18) ayant une surface symétrique de révolution dont la méridienne est de forme parabolique et une partie légèrement conique (19, 21) constituant une partie de calibrage de la partie courante (27a) et de la partie renforcée (27b) du tube-guide (27), respectivement.

9. Mandrin suivant l'une quelconque des revendications 7 et 8, caractérisé par le fait qu'il comporte de plus une partie initiale (17) cylindrique dont le diamètre est inférieur au diamètre intérieur de l'ébauche (22).

10. Tube-guide pour un assemblage de combustible d'un réacteur nucléaire ayant un diamètre extérieur sensiblement constant et présentant au moins une partie courante (27a) ayant une première épaisseur de paroi (e1) et une partie renforcée (27b) sur une fraction de la longueur du tube-guide (27) ayant une seconde épaisseur de paroi (e2) supérieure à la première épaisseur (e1) caractérisé par le fait qu'il comporte, entre sa partie courante (27a) et sa partie renforcée (27b) au moins une zone de transition (27c) dont la longueur est supérieure à 100 mm, dans laquelle la paroi du tube (27) a une épaisseur variant progressivement entre la première épaisseur (e1) et la seconde épaisseur (e2).

11. Tube-guide suivant la revendication 10, caractérisé par le fait que la longueur de la partie renforcée (27b) du tube-guide (27) ayant la seconde épaisseur (e2) est comprise entre 10 et 30 % de la longueur totale du tube-guide.

## Patentansprüche

1. Verfahren zur Herstellung eines Leitrohrs (27, 27', 27") für ein Brennelementebündels eines Kernreaktors, das einen im wesentlichen konstanten Außendurchmesser hat und mindestens einen laufenden Bereich (27a) mit einer ersten Wandstärke (e1) und über einen Teil der Länge des Leitrohrs einen verstärkten Bereich (27b) aufweist, der eine zweite Wandstärke (e2) größer als die erste Wandstärke (e1) hat, das darin besteht, einen rohrförmigen Rohling (22) auf einem Dorn (14) in einem Pilgerschrittwalzwerk (5) zu walzen, dadurch gekennzeichnet, daß
- in einer ersten Phase das Walzen eines ersten Abschnitts des Rohlings (22) auf einem ersten Bereich (18, 19) des Dorns (14) durchgeführt wird, mit einer Verringerung des Außendurchmessers des Rohlings (22) bis zum Außendurchmesser des Leitrohrs (27) und einer Verringerung der Wandstärke des Rohlings (22) bis auf eine der ersten (e1) oder der zweiten Stärke (e2),
- der Dorn (14) in axialer Richtung des Rohlings (22) verschoben wird,
- in einer zweiten Phase das Walzen eines zweiten Abschnitts des Rohlings (22) in einem zweiten Bereich (20, 21) des Dorns (14) durchgeführt wird, der zum ersten Bereich (18, 19) in axialer Richtung des Dorns (14) beabstandet ist, mit einer Verringerung des Außendurchmessers des Rohlings (22) bis zum Außendurchmesser des Leitrohrs (27) und einer Verringerung der Wandstärke des Rohlings (22) bis auf die andere der ersten (e1) und der zweiten Stärke (e2).

2. Verfahren nach Anspruch 1, dadurch gekennzeichnet, daß
- nacheinander entlang der Länge des gleichen Rohlings (22) in wiederholter Weise die erste Walzphase, eine erste Zwischenverschiebung des Dorns (14), die zweite Walzphase und eine zweite Verschiebung des Dorns entgegengesetzt zur ersten Verschiebung durchgeführt werden, wobei die erste Zwischenverschiebung des Dorns in der axialen Richtung zwischen einer ersten und einer zweiten Position durchgeführt wird, die die Durchmesser- und Wandstärkenverringerungen des Rohlings während der ersten bzw. der zweiten Phase ermöglichen,
- am Ausgang des Pilgerschrittwalzwerks ein rohrförmiges gewalztes Produkt (26) erhalten wird, das aufeinanderfolgende Zonen (24, 25) aufweist, die je die erste Wandstärke (e1) bzw. die zweite Wandstärke (e2) aufweisen,
- in bestimmten Zonen das gewalzte rohrförmige Produkt (26) in Abschnitte zerschnitten wird, um mehrere Leitrohre (27, 27', 27") zu erhalten, die je einen laufenden Bereich mit einer ersten Wandstärke (e1) und einen verstärkten Bereich mit einer zweiten Wandstärke (e2) aufweisen, die größer ist als die erste Wandstärke (e1).

3. Verfahren nach Anspruch 2, dadurch gekennzeichnet, daß das Rohr unter Verwendung einer mitlaufenden Trenneinrichtung zerschnitten wird.

4. Verfahren nach einem der Ansprüche 2 und 3, dadurch gekennzeichnet, daß vor dem Zerschneiden des gewalzten Produkts (26) auf dem gewalzten Produkt (26) die Position eines Endes einer Übergangszone (27c) zwischen den Bereichen des gewalzten rohrförmigen Produkts (26) lokalisiert wird, die die erste bzw. die zweite Wandstärke aufweisen.

5. Verfahren nach Anspruch 4, dadurch gekennzeichnet, daß das Ende der Übergangszonen (27c) unter Verwendung eines Luftmeßgeräts (30) lokalisiert wird, das über eine Leitung (31) mit einer Düse (32) verbunden ist, welche ins Innere des rohrförmigen Produkts (26) eingeführt ist.

6. Verfahren nach Anspruch 4, dadurch gekennzeichnet, daß die Position des Endes der Übergangszonen (27c) des gewalzten Produkts (26) unter Verwendung einer Wirbelstrom-Meßsonde (33) lokalisiert wird, die aus einer Wicklung besteht, welche das gewalzte rohrförmige Produkt (26) umgibt.

7. Formgebungsdorn eines Pilgerschrittwalzwerks (5) zur Anwendung eines Verfahrens nach einem der Ansprüche 1 bis 6, dadurch gekennzeichnet, daß er nacheinander in Richtung seiner Länge einen ersten, drehsymmetrischen Bereich (18, 19), dessen Querschnittsdurchmesser in axialer Richtung des Dorns von einem ersten Wert geringer als der Innendurchmesser des Rohlings (22) bis zu einem Wert gleich dem Innendurchmesser des laufenden Bereichs (27a) des herzustellenden Leitrohrs (27) abnimmt, und einen zweiten, drehsymmetrischen Bereich (20, 21) aufweist, dessen Querschnittsdurchmesser in axialer Richtung des Dorns von einem Wert gleich dem Innendurchmesser des laufenden Bereichs (27a) des Leitrohrs (27) bis zu einem zweiten Wert gleich dem Innendurchmesser des verstärkten Bereichs (27b) des Rohrs (27) abnimmt.

8. Dorn nach Anspruch 7, dadurch gekennzeichnet, daß jeder der aufeinanderfolgenden Bereiche (18, 19, 20, 21) des Dorns (14) einen Abschnitt (18) mit einer drehsymmetrischen Oberfläche, dessen Meridianschnitt parabelförmig ist, und einen leicht konischen Bereich (19, 21) aufweist, der einen Kalibrierbereich des laufenden Bereichs (27a) bzw. des verstärkten Bereichs (27b) des Leitrohrs (27) bildet.

9. Dorn nach einem der Ansprüche 7 und 8, dadurch gekennzeichnet, daß er außerdem einen zylindrischen Anfangsbereich (17) aufweist, dessen Durchmesser kleiner als der Innendurchmesser des Rohlings (22) ist.

10. Leitrohr für ein Brennelementebündel eines Kernreaktors mit einem im wesentlichen konstanten Außendurchmesser und mit mindestens einem laufenden Bereich (27a) mit einer ersten Wandstärke (e1) und über einen Teil der Länge des Leitrohrs (27) mit einem verstärkten Bereich (27b) mit einer zweiten Wandstärke (e2) größer als die erste Wandstärke (e1), dadurch gekennzeichnet, daß es zwischen seinem laufenden Bereich (27a) und seinem verstärkten Bereich (27b) mindestens eine Übergangszone (27c) aufweist, deren Länge größer als 100 mm ist und in der die Wand des Rohrs (27) eine Stärke aufweist, die progressiv zwischen der ersten Stärke (e1) und der zweiten Stärke (e2) variiert.

11. Leitrohr nach Anspruch 10, dadurch gekennzeichnet, daß die Länge des verstärkten Bereichs (27b) des Leitrohrs (27) mit der zweiten Wandstärke (e2) zwischen 10 und 30% der Gesamtlänge des Leitrohrs liegt.

## Claims

1. Method for manufacturing a guide thimble (27, 27', 27") for a nuclear reactor fuel assembly, having an outside diameter which is substantially constant and having at least one flow portion (27a), which has a first wall thickness (e1), and a reinforced portion (27b) along a portion of the length of the guide thimble which has a second wall thickness (e2) greater than the first thickness (e1), the method comprising rolling a tubular blank (22) on a mandrel (14) in a pilgrim step rolling mill (5), characterised in that:
- there is effected, in a first phase, the rolling of a first portion of the blank (22), on a first portion (18, 19) of the mandrel (14), with a reduction in the outside diameter of the blank (22) as far as the outside diameter of the guide thimble (27) and a reduction in the thickness of the wall of the blank (22) as far as either the first thickness (e1) or the second thickness (e2),
- the mandrel (14) is displaced in the axial direction of the blank (22) and
- there is effected, in a second phase, the rolling of a second portion of the blank (22), on a second portion (20, 21) of the mandrel (14) which is arranged with spacing from the first portion (18, 19) in the axial direction of the mandrel (14), with a reduction in the outside diameter of the blank (22) as far as the outside diameter of the guide thimble (27) and a reduction in the thickness of the blank (22) as far as the other of the first thickness (e1) or the second thickness (e2).

2. Method according to claim 1, characterised in that there is effected repeatedly and successively, along the length of the same blank (22), the first rolling phase, a first intermediate displacement of the mandrel (14), the second rolling phase and a second displacement of the mandrel which is counter to the first displacement, the first intermediate displacement of the mandrel being effected in the axial direction between a first position and a second position allowing the reductions in the diameter and the thickness of the blank during the first phase and the second phase, respectively,
- there is obtained, at the outlet of the pilgrim step rolling mill, a rolled tubular product (26) which comprises successive regions (24, 25) which have the first thickness (e1) and the second thickness (e2), respectively,
- the rolled tubular product (26) is cut off in the form of portions at specific regions in order to obtain a plurality of guide thimbles (27, 27', 27"), each comprising a flow portion having a first thickness (e1) and a reinforced portion having a second thickness (e2) greater than the first thickness (e1) .

3. Method according to claim 2, characterised in that the tube is cut off using a revolving cutting device.

4. Method according to either claim 2 or claim 3, characterised in that, before the cutting-off of the rolled product (26), there is marked on the rolled product (26) the position of one end of transition regions (27c) between the portions of the rolled tubular product (26) having the first wall thickness and the second wall thickness, respectively.

5. Method according to claim 4, characterised in that the end of the transition regions (27c) is marked using an air gauge (30) which is connected by a duct (31) to a nozzle (32) which is introduced inside the tubular product (26).

6. Method according to claim 4, characterised in that the position of the end of the transition regions (27c) of the rolled product (26) is marked using an eddy-current sensor (33) constituted by a coil which encircles the rolled tubular product (26).

7. Forming mandrel of a pilgrim step rolling mill (5) for carrying out a method according to any one of claims 1 to 6, characterised in that it comprises, successively along the length thereof, a first symmetrical revolution portion (18, 19), of which the diameter of the cross-section in the axial direction of the mandrel decreases from a first value which is less than the inside diameter of the blank (22) to a value which is equal to the inside diameter of the flow portion (27a) of the guide thimble (27) to be produced and a second symmetrical revolution portion (20, 21), of which the diameter of the cross-section decreases, in the axial direction of the mandrel, from a value which is equal to the inside diameter of the flow portion (27a) of the guide thimble (27) to a second value which is equal to the inside diameter of the reinforced portion (27b) of the tube (27).

8. Mandrel according to claim 7, characterised in that each of the successive portions (18, 19, 20, 21) of the mandrel (14) comprises a portion (18), which has a symmetrical revolution surface whose meridian is of parabolic shape, and a slightly conical portion (19, 21) which constitutes a portion for calibrating the flow portion (27a) and the reinforced portion (27b) of the guide thimble (27), respectively.

9. Mandrel according to either claim 7 or claim 8, characterised in that it further comprises an initial cylindrical portion (17) whose diameter is smaller than the inside diameter of the blank (22).

10. Guide thimble for a nuclear reactor fuel assembly, having an outside diameter which is substantially constant and having at least one flow portion (27a), which has a first wall thickness (e1), and a reinforced portion (27b) along a portion of the length of the guide thimble (27) which has a second wall thickness (e2) greater than the first thickness (e1), characterised in that it comprises, between the flow portion (27a) and the reinforced portion (27b) thereof, at least one transition region (27c) whose length is greater than 100mm, within which the wall of the tube (27) has a thickness which varies progressively between the first thickness (e1) and the second thickness (e2).

11. Guide thimble according to claim 10, characterised in that the length of the reinforced portion (27b) of the guide thimble (27) having the second thickness (e2) is between 10 and 30% of the total length of the guide thimble.
